# EUROPÄISCHE PATENTSCHRIFT

(11) **EP 3 662 732 B1**
(45) Veröffentlichungstag und Bekanntmachung des Hinweises auf die Patenterteilung: **10.11.2021**
(21) Anmeldenummer: 19212693.6
(22) Anmeldetag: 29.11.2019
(51) Int. Cl.: A01C 7/08, A01C 7/10

(54) **LANDWIRTSCHAFTLICHE MASCHINE ZUR AUSBRINGUNG VON KÖRNIGEN FESTSTOFFEN MIT EINEM PNEUMATISCHEN FÖRDERSYSTEM**
AGRICULTURAL MACHINE FOR SPREADING GRANULAR SOLIDS WITH A PNEUMATIC CONVEYING SYSTEM
MACHINE AGRICOLE POUR L'ÉPANDAGE DE SOLIDES GRANULAIRES AVEC UN SYSTÈME DE TRANSPORT PNEUMATIQUE

(30) Priorität: 03.12.2018 DE 102018130638
(43) Veröffentlichungstag der Anmeldung: 10.06.2020
(73) Patentinhaber: Lemken GmbH & Co KG, 46519 Alpen (DE)
(72) Erfinder: Bergerfurth, Dennis, 46459 Rees (DE); Gotzen, Christian, 41751 Viersen (DE)

(56) Entgegenhaltungen:
- EP-A1- 0 328 858
- EP-A1- 2 269 434
- EP-A1- 2 959 762
- DD-A1- 157 290
- DE-T2- 69 927 309
- NL-A- 8 801 011

## Beschreibung

Die vorliegende Erfindung bezieht sich auf eine landwirtschaftliche Maschine zur Ausbringung von körnigen Feststoffen mit einem pneumatischen Fördersystem zur Beförderung der körnigen Feststoffe aus einem Vorratstank zu einer Anzahl von Abgabeeinheiten, wobei das Fördersystem ein Gebläse, eine Verbindungsleitung vom Tank zu einer Verteilvorrichtung, die eine Verteilkammer mit einer darin ausgebildeten Anzahl von Auslauföffnungen aufweist, und eine Anzahl von Leitungen, die jeweils an eine zugehörige Auslauföffnung angeschlossen sind und die mit dem Luftstrom beförderte Feststoffe jeweils zu einer der Leitung zugeordneten Ausgabeeinheit leiten, wobei jeder Auslauföffnung ein Sektor einer Außenwandung der Verteilkammer mit einer jeweiligen Sektorengröße zugeordnet ist und die den Auslauföffnungen zugeordneten Sektoren unterschiedliche Anteile an der Summe der in der Verteilkammer ausgebildeten Sektoren einnehmen.

Eine Maschine mit einer Verteilvorrichtung, ist aus der Schrift DE 195 42 057 A1 bekannt. Es hat sich herausgestellt, dass die Feststoffe trotz der gleichmäßigen Anordnung der Auslauföffnungen mit identischen Größenanteilen jeder Auslauföffnung an der Außenwandung der Verteilkammer nicht gleichmäßig auf die Auslauföffnungen verteilt werden.

Aus der Schrift DD 157290 ist eine gattungsgemäße Maschine bekannt, bei der in einem Gehäuse eine Verteilkammer angeordnet ist, von der aus die körnigen Feststoffe in angeschlossene Teilleitungen verteilt werden. Mehrere Teilleitungen münden jeweils in einem stromabwärts angeordneten gemeinsamen Mehrfachmündungsstück. Von dort aus werden die körnigen Feststoffe den zugeordneten Drillscharen in jeweils einer an das Mehrfachmündungsstück angeschlossenen Abgangsleitung zugeleitet. Der für ein Drillschar vorgesehene Zustrom an Feststoffen wird also zunächst in mehrere Teilgutströme aus der Verteilkammer aufgeteilt, um diese Teilgutströme stromabwärts der Verteilkammer wieder in einem Mehrfachmündungsstück zusammenzuführen. In der Verteilkammer befinden sich unterschiedlich große Kreissektoren, die sich durch einen unterschiedlich ausfallenden Kreisbogenanteil voneinander unterscheiden. Es wird nicht näher erläutert, warum welche Teilleitungen einem bestimmten Kreissektor zugeordnet werden könnten. Nicht benötigte Teilleitungen werden geschlossen. Die Zahl der angeschlossenen Teilleitungen kann je nach Anwendungsfall variiert werden, dabei bleibt es aber dem Zufall überlassen, welche Kreissektoren den Teilleitungen und welche von diesen einem Mehrfachmündungsstück zugeordnet werden.

Es ist die Aufgabe der vorliegenden Erfindung, die Verteilung der Feststoffe auf die Auslauföffnungen zu verbessern.

Die Aufgabe wird für eine gattungsgemäße Maschine gelöst, indem Leitungen, die an Auslauföffnungen angeschlossen sind, deren zugehörige Sektorengröße größer ist als die Sektorengröße anderer Auslauföffnungen, im Anschlussbereich an die Auslauföffnung einen höheren Staudruck aufweisen als Leitungen, die an Auslauföffnungen angeschlossen sind, deren zugehörige Sektorengröße kleiner ist als die Sektorengröße anderer Auslauföffnungen.

Es hat sich herausgestellt, dass die an die Auslauföffnungen angeschlossenen Leitungen unterschiedliche Staudrücke aufweisen. Die unterschiedlichen Staudrücke ergeben sich aus unterschiedlichen Längen der an die jeweiligen Auslauföffnungen angeschlossenen Leitungen, unterschiedliche Biegeradien, in denen die Leitungen in Krümmungen und Bögen geführt sind, ein aufwärts oder abwärts gerichteter Leitungsverlauf und anderen Einflussfaktoren auf den Staudruck in einer Leitung. Wenn der in die Verteilkammer strömende Luftstrom auf unterschiedliche Staudrücke in den Auslauföffnungen stößt, neigt der Luftstrom bei gleich großen Auslauföffnungen dazu, bevorzugt in diejenigen Auslauföffnungen zu strömen, die einen geringeren Staudruck aufweisen. Dadurch strömt in die Auslauföffnungen mit einem höheren Staudruck eine geringere Menge des Luftstroms ein, und diese Auslauföffnungen werden dadurch auch nur mit einer geringeren Menge von Feststoffen beschickt als die Auslauföffnungen mit einem geringeren Staudruck. Trotz der gleich großen Öffnungen der Auslauföffnungen ergeben sich also unterschiedliche Durchsatzmengen an Feststoffen.

Die unterschiedlichen Staudrücke in den Auslauföffnungen und die daraus resultierenden unterschiedlichen Durchsatzmengen mit Feststoffen können durch die nun unterschiedlichen Sektorengrößen der Auslauföffnungen zumindest teilweise oder vollständig kompensiert werden. Indem die Leitungen mit einem höheren Staudruck an Auslauföffnungen mit einer relativ größeren Sektorengröße angeschlossen sind, können diese Auslauföffnungen trotz der bei gleicher Größe geringeren Einströmmenge nun durch die größere Dimensionierung zumindest annähernd gleiche Durchsatzmengen an Feststoffen aufnehmen wie Auslauföffnungen, deren daran angeschlossene Leitungen einen geringeren Staudruck aufweisen.

Mit dem Begriff der Sektorengröße ist nicht die Querschnittsfläche der Auslauföffnung gemeint, sondern der Anteil, den ein Sektor an der Summe aller Sektoren an der Verteilfläche aufweist, über die die körnigen Feststoffe in der Verteilkammer den jeweiligen Auslauföffnungen zugeteilt werden. Die Verteilflächen einzelner Sektoren müssen nicht glattflächig ausgebildet sein, sondern können eine räumliche Gestaltung aufweisen, die die Teilung des Gutstroms der körnigen Feststoffe und des Luftstroms sinnvoll unterstützt, wie beispielsweise trichterartige Gestaltungen. Die Sektoren können voneinander durch Rippen, Stege, Ausformungen wie Erhebungen und Vertiefungen in den Leitflächen der Verteilkammer und dergleichen voneinander abgeteilt sein. Die Sektorengrößen können sich beispielsweise aus Kreisbogenanteilen ergeben, innerhalb derer körnige Feststoffe nur einer zugehörigen Auslauföffnung zugeleitet werden.

Nach einer Ausgestaltung der Erfindung weist die Verteilkammer eine kreisrunde Grundform auf. In einer kreisrunden Grundform ergeben sich gleichmäßige Strömungsverhältnisse, die die gleichmäßige Verteilung der körnigen Feststoffe verbessern.

Nach einer Ausgestaltung der Erfindung ergeben sich die jeweiligen Anteile der Auslauföffnungen an der Summe der in der Verteilkammer ausgebildeten Sektoren aus unterschiedlichen Kreisbogenanteilen von Leitflächen, die auf die jeweiligen Auslauföffnungen entfallen, und/oder aus unterschiedlich großen Querschnittsflächen der Auslauföffnungen in der Verteilkammer. Für die Erfindung macht es keinen entscheidenden Unterschied, ob die Auslauföffnungen so unterschiedlich groß gestaltet werden, dass sich pro Einheit einer Querschnittsfläche unterschiedliche Einströmmengen der körnigen Feststoffe an den Auslauföffnungen ergeben und die Mengendifferenzierung somit nur über die Größe der Auslauföffnungen gesteuert wird, oder ob die Auslauföffnungen genau oder zumindest annähernd gleich groß gestaltet sind und die Größe der einer jeweiligen Auslauföffnung zugeordneten Leitfläche unterschiedlich gestaltet ist, oder ob eine Kombination dieser Möglichkeiten gewählt wird, um eine zumindest annähernd gleiche oder genau gleiche Einströmmenge in eine Auslauföffnung trotz unterschiedlicher Staudrücke in den an die Auslauföffnungen angeschlossenen Leitungen zu erreichen. Wesentlich ist, dass die in der Verteilkammer einer Auslauföffnung zuströmende Menge an körnigen Feststoffen trotz unterschiedlicher Staudrücke in den an die Auslauföffnungen angeschlossenen Leitungen durch eine Größenvariation der Auslauföffnungen und/oder der Sektorenanteile an den Leitflächen so differenziert ist, dass sich gleichwohl eine gleiche oder zumindest annähernd gleiche Verteilmenge für jede Auslauföffnung ergibt.

Nach einer Ausgestaltung der Erfindung weist die Verbindungsleitung im Mündungsbereich in die Verteilkammer eine zumindest annähernd vertikale Ausrichtung auf, so dass sie die körnigen Feststoffe aus einer zumindest annähernd vertikalen Richtung in die Verteilkammer einleitet, die Verbindungsleitung mündet zumindest annähernd mittig in der Verteilkammer ein, so dass die körnigen Feststoffe mittig in die Verteilkammer eingefördert werden, und in der Verteilkammer sind Leitflächen ausgebildet, mit denen die Feststoffe aus der zumindest annähernd vertikalen Richtung in eine zumindest annähernd horizontale und radiale Richtung auf die Auslauföffnungen zu umgeleitet werden. Durch die mittige Einströmung der körnigen Feststoffe in die Verteilkammer aus einer vertikalen Richtung und die Verteilung der körnigen Feststoffe in eine waagerechte radiale Richtung nach außen wirken die Gravitationskräfte auf die körnigen Feststoffe gleichmäßig und unabhängig davon ein, auf welche Auslauföffnung zu die körnigen Feststoffe vom Luftstrom befördert werden. Ein Verteilungsfehlereffekt, der aus unterschiedlich auf verschiedene Teile des Gutstroms einwirkenden Gravitationskräften herrühren könnte, wird dadurch eliminiert.

Nach einer Ausgestaltung der Erfindung weist die Verteilkammer zwischen 3 und 48 Auslauföffnungen auf. Je nachdem, wie viele Auslauföffnungen die Verteilkammer aufweist, können die Unterschiede zwischen den einzelnen Auslauföffnungen zugehörigen Sektorgrößen unterschiedlich stark differenziert werden. Einen Einfluss darauf, wie stark die jeweiligen Sektorgrößen voneinander differenziert sind, hat auch die Arbeitsbreite der landwirtschaftlichen Maschine. Bei einer Arbeitsbreite von beispielsweise 3 m ergeben sich geringere Unterschiede im Staudruck aus der Länge der jeweiligen Leitung zu einer mittleren und einer äußeren Säschar als bei einer Arbeitsbreite von beispielsweise 12 m. In einem Fall beträgt der Leitungslängenunterschied ca. 1,5 m, im anderen Fall ca. 6 m. Je größer der Leitungslängenunterschied in einer landwirtschaftlichen Maschine ausfällt, umso mehr Zwischenstufen der Sektorengrößen können zwischen der größten und kleinsten Sektorengröße ausgebildet werden, um über die Breite der landwirtschaftlichen Maschine eine annähernd oder genau gleiche Verteilung in der Verteilkammer trotz unterschiedlicher Staudrücke zu erzielen.

Nach einer Ausgestaltung der Erfindung ist die Verteilkammer über die Bauhöhe der Auslauföffnungen durch zwei ringförmige Formkörper umfangseitig begrenzt, die durch eine zumindest annähernd horizontal verlaufende Trennlinie voneinander getrennt sind, und beide Formkörper weisen zueinander passende Ausformungen auf, die paarweise jeweils eine Auslauföffnung ausbilden. Die zwei ringförmigen Formkörper sind als Gussteile aus einem metallischen, keramischen Werkstoff oder einem Kunststoff leicht herstellbar und montierbar. Die Verteilkammer ist im Wartungsoder Reparaturfall auch leicht von oben zugänglich, wenn nur der obere ringförmige Formkörper demontiert wird. Die Leitflächen, über die die körnigen Feststoffe den jeweiligen Auslauföffnungen zugleitet werden, können in die Werkzeuge für die Formkörper leicht einmodelliert werden.

Nach einer Ausgestaltung der Erfindung sind die Auslauföffnungen auf der nach außen weisenden Seite der Außenwandung durch eine identifizierende Markierung gekennzeichnet. Wartungs- und Reparaturarbeiten werden erleichtert, wenn sofort anhand der Markierung erkennbar ist, welche Sektorengröße eine jeweilige Auslauföffnung aufweist. Die Markierung kann dauerhaft ausgestaltet sein, beispielsweise indem sie als eine Vertiefung und/oder Erhebung in der nach außen weisenden Oberfläche des Gehäuses der Auslauföffnung ausgebildet ist.

Nach einer Ausgestaltung der Erfindung sind zwischen benachbarten Auslauföffnungen bewegliche Trennstege angeordnet, deren räumliche Lage manuell und/oder motorisch verstellbar ist. Durch bewegliche Trennstege ist eine nachträgliche Feinjustierung der Sektorengrößen möglich. Die landwirtschaftliche Maschine kann über die Trennstege an ein unterschiedliches Förderverhalten von unterschiedlichen körnigen Feststoffen und/oder an einen Verschleiß oder einen Materialaufbau innerhalb der Verteilkammer angepasst werden. Es ist vorstellbar, für bestimmte körnige Feststoffe bestimmte Stellpositionen der Trennstege zu empfehlen, um die landwirtschaftliche Maschine optimal auf die jeweiligen Feststoffe einzustellen.

Nach einer Ausgestaltung der Erfindung sind an den Auslauföffnungen, den Leitungen und/oder den Ausgabeeinheiten an eine Auswerteelektronik angeschlossene Sensoren angeordnet, mit denen die in einer einzelnen Leitung beförderte Menge von körnigen Feststoffen ermittelt wird, die Auswerteelektronik zeigt die ermittelten Mengenwerte der einzelnen Leitungen und Mengenunterschiede an und/oder vergleicht diese und/oder gibt Stellsignale an eine Aktorik aus, mit denen die Trennstege verstellbar sind. Die Verstellung der Trennstege kann bei dieser Ausstattung der landwirtschaftlichen Maschine auch automatisiert erfolgen, wenn die landwirtschaftliche Maschine mit einer Sensorik ausgestattet ist, die die Verteilung der körnigen Feststoffe auf die einzelnen Auslauföffnungen misst, und eine Steuerung vorhanden ist, mit der die ermittelten Sensorwerte über eine geeignete Aktorik in Stellbewegungen der Trennstege umgesetzt werden. Zwischen der Vollautomatik und einer manuellen Verstellung sind auch Lösungen möglich, die nur fernbedienbar oder an der landwirtschaftlichen Maschine selbst motorisch verstellbar sind.

Nach einer Ausgestaltung der Erfindung sind an Auslauföffnungen, Leitungen und/oder Ausgabeeinheiten Drosselelemente angeordnet, durch die der Staudruck in der betreffenden Leitung erhöht ist. Ergänzend zur Variation der Sektorgrößen kann zusätzlich auch der Staudruck in den jeweiligen Leitungen über Drosselelemente gezielt verändert werden, so dass sich die Staudrücke in den einzelnen Leitungen auf einem Niveau bewegen, bei dem sich annähernd gleiche Verteilmengen in den jeweiligen Auslauföffnungen ergeben. Die Drosselelemente werden in den Bauteilen für die Leitungen eingesetzt, in denen ein geringerer Staudruck als in anderen Leitungen herrscht. Die Drosselelemente können insbesondere eingesetzt werden, um eine Feinjustierung der Verteilmengen vorzunehmen.

Nach einer Ausgestaltung der Erfindung sind die Drosselelemente beweglich und/oder volumetrisch veränderlich ausgestaltet und deren räumliche Lage und/oder Volumenform ist manuell und/oder motorisch verstellbar. Auch hier ist zwischen einer Vollautomatik und einer nur manuellen Verstellung je nach betriebenem Aufwand jede Zwischenstufe möglich.

Nach einer Ausgestaltung der Erfindung sind an den Auslauföffnungen, den Leitungen und/oder den Ausgabeeinheiten an eine Auswerteelektronik angeschlossene Sensoren angeordnet, mit denen die in einer einzelnen Leitung beförderte Menge von körnigen Feststoffen ermittelt wird, die Auswerteelektronik vergleicht die ermittelten Mengenwerte der einzelnen Leitungen und zeigt Mengenunterschiede an und/oder gibt Stellsignale an eine Aktorik aus, mit denen die Drosselelemente beweglich und/oder volumetrisch veränderlich sind. Durch die vorgeschlagene Sensorik wird eine vollautomatische Regelung der Drosselelemente möglich.

Weitere Merkmale der Erfindung ergeben sich aus den Ansprüchen, den Figuren und der gegenständlichen Beschreibung. Alle vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder aber in Alleinstellung verwendbar.

Die Erfindung wird nun anhand eines bevorzugten Ausführungsbeispiels sowie unter Bezugnahme auf die beigefügten Zeichnungen näher erläutert.

Es zeigen:
- Fig. 1:: eine skizzenhafte Darstellung einer landwirtschaftlichen Maschine,
- Fig. 2:: eine Ansicht von schräg oben auf eine Verteilvorrichtung,
- Fig. 3:: eine Ansicht von oben auf den unteren Formkörper der in Fig. 2 gezeigten Verteilvorrichtung mit eingezeichneten Winkelmaßen,
- Fig. 4:: einen Vorschlag zur Aufteilung einer Verteilkammer in acht Sektoren, und
- Fig. 5:: eine Ansicht von oben auf den oberen Formkörper der in Fig. 2 gezeigten Verteilvorrichtung.

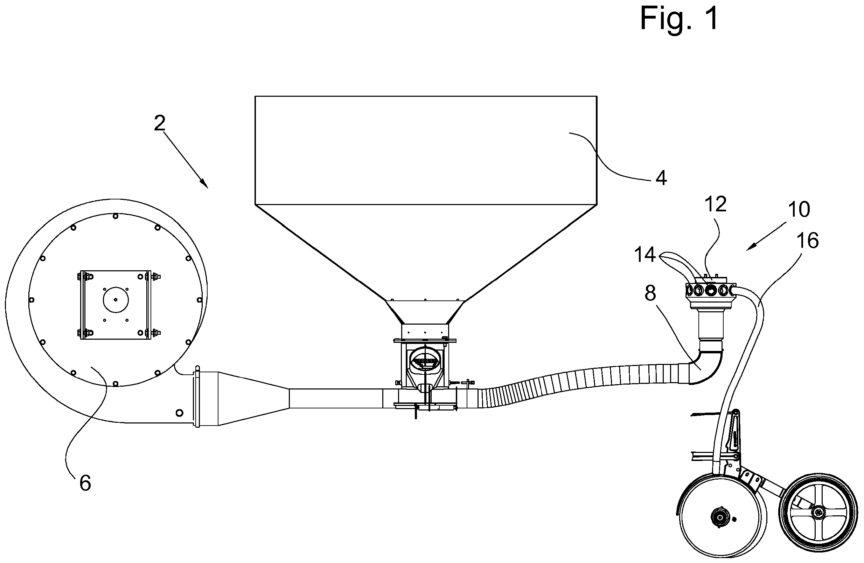

In Fig. 1 ist eine skizzenhafte Darstellung einer landwirtschaftlichen Maschine 2 gezeigt, wobei die landwirtschaftliche Maschine eine Sämaschine ist. In einem Vorratstank 4 befindet sich Saatgut als ein Beispiel für körnige Feststoffe, die aus dem Vorratstank 4 zu einer Anzahl von Abgabeeinheiten pneumatisch befördert werden. Die körnigen Feststoffe werden mit dem Luftstrom befördert, dass das Gebläse 6 erzeugt. Der Luftstrom befördert die körnigen Feststoffe über die Verbindungsleitung 8 zur Verteilvorrichtung 10. In der Verteilvorrichtung 10 befindet sich eine Verteilkammer 12, in der die körnigen Feststoffe auf eine Anzahl von Auslauföffnungen 14 verteilt werden. An die Auslauföffnungen 14 sind jeweils Leitungen 16 angeschlossen, über die die körnigen Feststoffe zu den Abgabeeinheiten befördert werden. Bei den Abgabeeinheiten kann es sich beispielsweise um ein Säschar handeln. Die körnigen Feststoffe werden vom Luftstrom mit Strömungsgeschwindigkeiten von bis zu 30 m/s bewegt.

Die Verteilvorrichtung 10 ist im Ausführungsbeispiel annähernd waagerecht zur in vertikaler Richtung aufragenden Verbindungsleitung 8 ausgerichtet. Aus der Verbindungsleitung 8 werden die körnigen Feststoffe in einer Bewegungsbahn um etwa 90° umgelenkt, um dann aus den Auslauföffnungen 14 in die Leitungen 16 einzutreten. Bei der Umlenkung der körnigen Feststoffe in der Verteilkammer 12 werden diese den jeweiligen Auslauföffnungen 14 zugeordnet, durch die sie die Verteilkammer 12 verlassen.

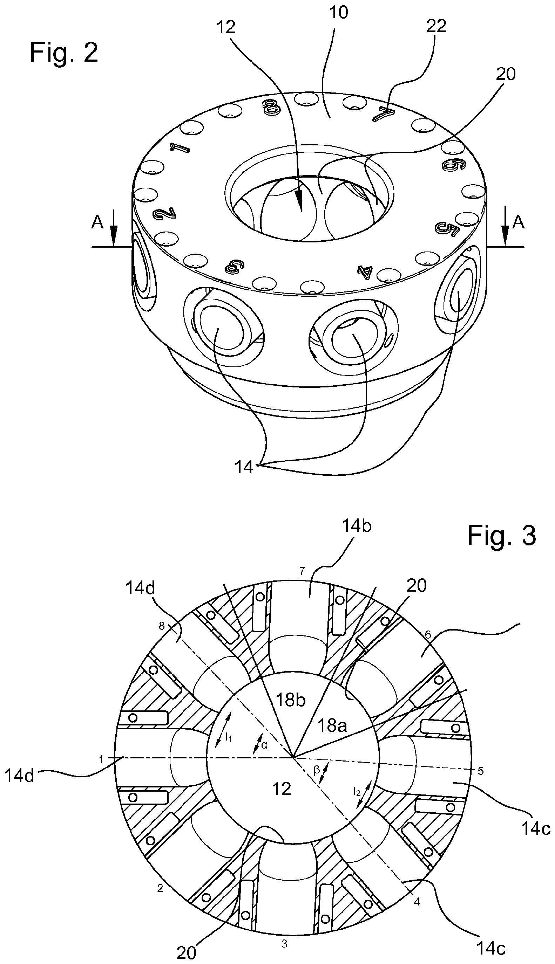

In Fig. 2 ist eine Ansicht von schräg oben auf eine Verteilvorrichtung 10 ohne einen oberen Deckel gezeigt. In dieser Ansicht ist die Verteilerkammer 12 im Inneren der Verteilvorrichtung 10 gut erkennbar, von der aus die körnigen Feststoffe in die Auslauföffnungen 14 eintreten. Die Verteilvorrichtung 10 weist eine Ringform auf. Die Auslassöffnungen 14 sind so gestaltet, dass die Leitungen 16 außen daran angeschlossen werden können. Jeder Auslauföffnung 14 ist ein Sektor zugeordnet, aus dem die dort befindlichen körnigen Feststoffe in die zugehörige Auslauföffnung 14 einlaufen. Die Verteilkammer 12 verfügt über Oberflächen, über die die körnigen Feststoffe den Auslassöffnungen 14 zugeleitet werden. Diese Oberflächen bilden Leitflächen 20. Zudem sind an der gezeigten Verteilvorrichtung 10 in der Ansicht von schräg oben die Markierungen 22 erkennbar, mit der die einzelnen Auslauföffnungen 14 gekennzeichnet sind.

In Fig. 3 ist eine Ansicht von oben auf den unteren Formkörper der in Fig. 2 gezeigten Verteilvorrichtung 10 mit eingezeichneten Winkeln α, β dargestellt. Die Winkel a, β zeigen den Winkelabstand, den einzelne Auslauföffnungen 14 von einer benachbarten Auslauföffnung 14 haben. In dieser Ansicht ist erkennbar, dass zu jeder Auslauföffnung 14 ein Sektor 18 gehört, aus dem heraus die körnigen Feststoffe in die zugehörige Auslauföffnung 14 einlaufen. So werden beispielsweise die Feststoffe aus dem Sektor 18a in die Auslauföffnung 14a befördert und die körnigen Feststoffe, die im Sektor 18b durch die Verteilvorrichtung 10 befördert werden, laufen in die Auslauföffnung 14b ein. Aus der Ansicht in Fig. 3 ist erkennbar, dass die Winkelabstände der Längsmittelachsen der Auslauföffnungen 14c und 14d in jeweils unterschiedlichen Winkeln bezogen auf den Mittelpunkt der Verteilkammer 12 zueinander stehen. Während der Winkel β zwischen den beiden Längsmittelachsen der Auslauföffnungen 14c etwa 40° beträgt, beträgt der Winkel zwischen den Längsmittelachsen der beiden Auslauföffnungen 14d etwa 45°. Durch den größeren Winkel verfügen die Auslauföffnungen 14d über eine größere Sektorengröße als die Auslauföffnungen 14c. In Umfangsrichtung der Innenwand der Verteilkammer 12 gesehen gilt deshalb l₁ >l₂ die zum Winkel α gehörende Sektorengröße ist dadurch größer als die zum Winkel β gehörende Sektorengröße.

Wegen der größeren Sektorengröße laufen in die Auslauföffnungen 14d mehr körnige Feststoffe ein als in die Auslauföffnungen 14c mit kleineren Sektorengrößen. Wenn in den Leitungen, die an die Auslauföffnungen 14d angeschlossen sind, allerdings ein höherer Staudruck herrscht als in den Leitungen 16, die an die Auslauföffnungen 14c angeschlossen sind, strömt in die Auslauföffnungen 14d dem höheren Staudruck entsprechend weniger Luft und damit auch von dieser beförderte körnige Feststoffe in die Auslauföffnungen ein, wodurch die größere Sektorgröße wieder kompensiert wird. Anders herum fließt in die Auslauföffnungen 14c bei einem geringeren Staudruck in den an die Auslauföffnung 14c angeschlossenen Leitungen 16 relativ mehr Luft und damit auch relativ mehr körnige Feststoffe in diese Leitungen 16 ein, wodurch die kleineren Sektorgrößen der Auslauföffnungen 14c ebenfalls ausgeglichen werden. Im Ergebnis ergeben sich daraus über alle Auslauföffnungen 14c, d gesehen nahezu gleiche Förderanteile der körnigen Feststoffe.

Im Ausführungsbeispiel ist eine Sämaschine gezeigt und erläutert. Die landwirtschaftliche Maschine kann allerdings auch beispielsweise ein Düngerstreuer sein, mit dem ein Dünger in angeschlossenen Düngescharen ausgebracht wird, oder es handelt sich um eine kombinierte Sä- und Düngemaschine.

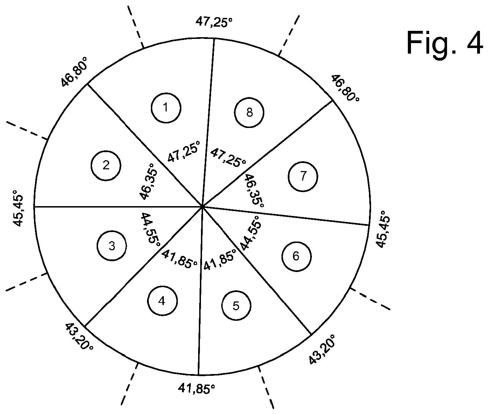

In Fig. 4 ist ein Vorschlag zur Aufteilung einer Verteilkammer 10 in acht Sektoren gezeigt. Während die Anschlüsse 4 und 5 von Auslauföffnungen 14 nur eine Sektorengröße von 41,85° abdecken, verfügen die Anschlüsse 3 und 6 über eine Sektorengröße von 44,55°, die Anschlüsse 2 und 7 über eine Sektorengröße von 46,35° und die Anschlüsse 1 und 8 über eine Sektorengröße von 47,25°. Durch die unterschiedlichen Winkelgrade ergeben sich auch unterschiedliche Sektorengrößen als Anteile an der Summe aller Sektorengrößen an den Leitflächen 20 innerhalb der Verteilkammer 12.

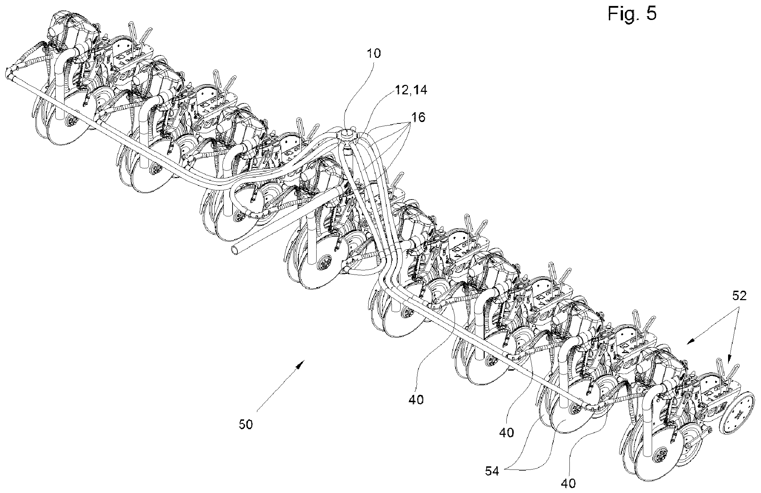

In Fig. 5 ist eine Sämaschine 50 mit einer Verteilvorrichtung 10 gezeigt, an deren Auslauföffnungen 14 acht Leitungen 16 angeschlossen sind. Jede von der Verteilvorrichtung 10 abgehende Leitung 16 mündet in ihrem Verlauf ein einer Y-Weiche 40, an der sich die Leitungen 16 auf zwei Leitungsstränge verzweigen. Die Verzweigung in zwei Leitungsstränge wird beispielsweise benötigt, um die Doppelscheibenschare 54 eines Doppelreihen-Säaggregats 52 bei der Aussaat kontinuierlich mit Feststoffen ergänzend zum Saatgut zu versorgen. Mit den Doppelreihen-Säaggregaten 52 ist es beispielsweise möglich, Einzelkörner in einem pflanzenbaulich vorteilhaften Doppelreihen, insbesondere Zickzack-Verband abzulegen. Dabei sind die Abstände der Doppelreihen-Säaggregate 52 zueinander wesentlich größer als die Abstände der zugehörigen Doppelscheibenschare 54 innerhalb der Doppelreihe, also im Verhältnis 3:1 oder größer. Die Dosierung und Ablage der Einzelkörner wird durch die verbesserte Verteilung in der Verteilkammer 12 ebenfalls präziser und sicherer.

## Patentansprüche

1. Landwirtschaftliche Maschine (2) zur Ausbringung von körnigen Feststoffen mit einem pneumatischen Fördersystem zur Beförderung der körnigen Feststoffe aus einem Vorratstank (4) zu einer Anzahl von Abgabeeinheiten, wobei das Fördersystem ein Gebläse (6), eine Verbindungsleitung (8) vom Tank (4) zu einer Verteilvorrichtung (10), die eine Verteilkammer (12) mit einer darin ausgebildeten Anzahl von Auslauföffnungen (14) aufweist, und eine Anzahl von Leitung (16), die jeweils an eine zugehörige Auslauföffnung (14) angeschlossen sind und die mit dem Luftstrom beförderte Feststoffe jeweils zu einer der Leitung (16) zugeordneten Ausgabeeinheit leiten, **dadurch gekennzeichnet, dass** jeder Auslauföffnung (14) ein Sektor einer Außenwandung der Verteilkammer (12) mit einer jeweiligen Sektorengröße zugeordnet ist und die den Auslauföffnungen (14) zugeordneten Sektoren unterschiedliche Anteile an der Summe der in der Verteilkammer (12) ausgebildeten Sektoren einnehmen, und die Leitungen (16), die an Auslauföffnungen (14) angeschlossen sind, deren zugehörige Sektorengröße größer ist als die Sektorengröße anderer Auslauföffnungen (14), im Anschlussbereich an die Auslauföffnung (14) einen höheren Staudruck aufweisen als Leitungen (16), die an Auslauföffnungen (14) angeschlossen sind, deren zugehörige Sektorengröße kleiner ist als die Sektorengröße anderer Auslauföffnungen (14).

2. Landwirtschaftliche Maschine (2) nach Anspruch 1, **dadurch gekennzeichnet, dass** die Verteilkammer (12) eine kreisrunde Grundform aufweist.

3. Landwirtschaftliche Maschine (2) nach Anspruch 2, **dadurch gekennzeichnet, dass** sich die jeweiligen Anteile der Auslauföffnungen (14) an der Summe der in der Verteilkammer (12) ausgebildeten Sektoren aus unterschiedlichen Kreisbogenanteilen von Leitflächen (20) ergeben, die auf die jeweiligen Auslauföffnungen (14) entfallen, und/oder aus unterschiedlich großen Querschnittsflächen der Auslauföffnungen (14) in der Verteilkammer (12).

4. Landwirtschaftliche Maschine (2) nach einem der vorhergehenden Ansprüche, **dadurch gekennzeichnet, dass** die Verbindungsleitung (8) im Mündungsbereich in die Verteilkammer (12) eine zumindest annähernd vertikale Ausrichtung aufweist, so dass sie die körnigen Feststoffe aus einer zumindest annähernd vertikalen Richtung in die Verteilkammer (12) einleitet, die Verbindungsleitung (8) zumindest annähernd mittig in der Verteilkammer (12) einmündet, so dass die körnigen Feststoffe mittig in die Verteilkammer (12) eingefördert werden, und in der Verteilkammer (12) Leitflächen (20) ausgebildet sind, mit denen die Feststoffe aus der zumindest annähernd vertikalen Richtung in eine zumindest annähernd horizontale und radiale Richtung auf die Auslauföffnungen (14) zu umgeleitet werden.

5. Landwirtschaftliche Maschine (2) nach einem der vorhergehenden Ansprüche, **dadurch gekennzeichnet, dass** die Verteilkammer (12) zwischen 3 und 48 Auslauföffnungen (14) aufweist.

6. Landwirtschaftliche Maschine (2) nach einem der vorhergehenden Ansprüche, **dadurch gekennzeichnet, dass** die Verteilkammer (12) über die Bauhöhe der Auslauföffnungen (14) durch zwei ringförmige Formkörper umfangseitig begrenzt ist, die durch eine zumindest annähernd horizontal verlaufende Trennlinie voneinander getrennt sind, und beide Formkörper zueinander passende Ausformungen aufweisen, die paarweise jeweils eine Auslauföffnung (14) ausbilden.

7. Landwirtschaftliche Maschine (2) nach einem der vorhergehenden Ansprüche, **dadurch gekennzeichnet, dass** die Auslauföffnungen (14) auf der nach außen weisenden Seite der Außenwandung durch eine identifizierende Markierung (22) gekennzeichnet sind.

8. Landwirtschaftliche Maschine (2) nach einem der vorhergehenden Ansprüche, **dadurch gekennzeichnet, dass** zwischen benachbarten Auslauföffnungen (14) bewegliche Trennstege angeordnet sind, deren räumliche Lage manuell und/oder motorisch verstellbar ist.

9. Landwirtschaftliche Maschine (2) nach Anspruch 8, **dadurch gekennzeichnet, dass** an den Auslauföffnungen (14), den Leitungen (16) und/oder den Ausgabeeinheiten an eine Auswerteelektronik angeschlossene Sensoren angeordnet sind, mit denen die in einer einzelnen Leitung beförderte Menge von körnigen Feststoffen ermittelt wird, die Auswerteelektronik die ermittelten Mengenwerte der einzelnen Leitungen (16) und Mengenunterschiede anzeigt und/oder diese vergleicht und/oder Stellsignale an eine Aktorik ausgibt, mit denen die Trennstege verstellbar sind.

10. Landwirtschaftliche Maschine (2) nach einem der vorhergehenden Ansprüche, **dadurch gekennzeichnet, dass** an Auslauföffnungen (14), Leitungen (16) und/oder Ausgabeeinheiten Drosselelemente angeordnet sind, durch die der Staudruck in der betreffenden Leitung erhöht ist.

11. Landwirtschaftliche Maschine (2) nach Anspruch 10, **dadurch gekennzeichnet, dass** die Drosselelemente beweglich und/oder volumetrisch veränderlich ausgestaltet sind und deren räumliche Lage und/oder Volumenform manuell und/oder motorisch verstellbar ist.

12. Landwirtschaftliche Maschine (2) nach Anspruch 11, **dadurch gekennzeichnet, dass** an den Auslauföffnungen (14), den Leitungen (16) und/oder den Ausgabeeinheiten an eine Auswerteelektronik angeschlossene Sensoren angeordnet sind, mit denen die in einer einzelnen Leitung beförderte Menge von körnigen Feststoffen ermittelt wird, die Auswerteelektronik die ermittelten Mengenwerte der einzelnen Leitungen (16) vergleicht und Mengenunterschiede anzeigt und/oder Stellsignale an eine Aktorik ausgibt, mit denen die Drosselelemente beweglich und/oder volumetrisch veränderlich sind.

## Claims

1. An agricultural machine (2) for spreading grainy solids, having a pneumatic conveying system for conveying the grainy solids out of a storage tank (4) to a number of dispensing units, wherein the conveying system comprises a blower (6) a connecting line (8) from the tank (4) to a distribution device (10), which comprises a distribution chamber (12) with a number of outlet openings (14) formed therein, and a number of lines (16), which are each connected to an associated outlet opening (14) and which each conduct solids conveyed with the airstream to one of the output units assigned to the line (16), **characterised in that**
each outlet opening (14) is assigned a sector of an outer wall of the distribution chamber (12) with a respective sector size and the sectors assigned to the outlet openings (14) take up different proportions in the sum of the sectors formed in the distribution chamber (12), and the lines (16), which are connected to outlet openings (14), whose associated sector size is greater than the sector size of other outlet openings (14), have in the connecting region to the outlet opening (14) a higher dynamic pressure than lines (16) that are connected to outlet openings (14) whose associated sector size is smaller than the sector size of other outlet openings (14).

2. The agricultural machine (2) according to Claim 1, **characterised in that** the distribution chamber (12) has a circular basic shape.

3. The agricultural machine (2) according to Claim 2, **characterised in that** the respective proportions of the outlet openings (14) in the sum of the sectors formed in the distribution chamber (12) materialise from different circular arc proportions of guiding surfaces (20) which are attributable to the respective outlet openings (14), and/or from different-size cross-sectional areas of the outlet openings (14) in the distribution chamber (12).

4. The agricultural machine (2) according to any one of the preceding claims, **characterised in that** the connecting line (8) in the mouth region into the distribution chamber (12) has an at least approximately vertical orientation so that it conducts the grainy solids from an at least approximately vertical direction into the distribution chambers (12), **in that** the connecting line (8) opens at least approximately centrally into the distribution chamber (12), so that the grainy solids are conveyed centrally into the distribution chamber (12), and **in that** in the distribution chamber (12) guiding surfaces (20) are formed, with which the solids from the at least approximately vertical direction are diverted in an at least approximately horizontal and radial direction towards the outlet openings (14).

5. The agricultural machine (2) according to any one of the preceding claims, **characterised in that** the distribution chamber (12) comprises between 3 and 48 outlet openings (14).

6. The agricultural machine (2) according to any one of the preceding claims, **characterised in that** the distribution chamber (12) is peripherally delimited by two annular shaped bodies over the construction height of the outlet openings (14), which are separated from one another by a separating line running at least approximately horizontally, and both shaped bodies comprise mouldings matching one another, which in pairs each form an outlet opening (14).

7. The agricultural machine (2) according to any one of the preceding claims, **characterised in that** the outlet openings (14) on the side of the outer wall facing towards the outside are **characterised by** an identifying marking (22).

8. The agricultural machine (2) according to any one of the preceding claims, **characterised in that** between neighbouring outlet openings (14) moveable separating webs are arranged, whose spatial position is manually and/or motor adjustable.

9. The agricultural machine (2) according to Claim 8, **characterised in that** on the outlet openings (14), the lines (16) and/or the output units sensors connected to an electronic evaluation system are arranged, with which the quantity of grainy solids conveyed in an individual line is determined, **in that** the electronic evaluation system shows the determined quantities of the individual lines (16) and quantity differences and/or compares these and/or outputs adjusting signals to an actuator system, with which the separating webs are adjustable.

10. The agricultural machine (2) according to any one of the preceding claims, **characterised in that** on outlet openings (14), lines (16) and/or output units throttling elements are arranged through which the dynamic pressure in the line concerned is increased.

11. The agricultural machine (2) according to Claim 10, **characterised in that** the throttling elements are configured so as to be moveable and/or volumetrically variable and the spatial position and/or volume shape of these is/are manually and/or motor adjustable.

12. The agricultural machine (2) according to Claim 11, **characterised in that** on the outlet openings (14), the lines (16) and/or the output units sensors connected to an electronic evaluation system are arranged, with which the quantity of grainy solids conveyed in an individual line is determined, **in that** the electronic evaluation system compares the determined quantities of the individual lines (16) and shows the quantity differences and/or outputs adjusting signals to an actuating system, with which the throttling elements are moveably and/or volumetrically variable.

## Revendications

1. Machine agricole (2) destinée à l'épandage de matières solides granuleuses, pourvue d'un système de convoyage pneumatique voué au convoyage des matières solides granuleuses à partir d'une cuve de stockage (4) vers un nombre d'unités distributrices, le système de convoyage comportant une soufflante (6), une conduite de raccordement (8) de la cuve (4) vers un dispositif répartiteur (10), qui comporte une chambre de répartition (12) avec un nombre d'orifices d'écoulement (14) conçu dans celle-ci et un nombre de conduites (16), dont chacune est raccordée sur un orifice d'écoulement (14) associé et qui dirigent les matières solides convoyées par le flux d'air vers chaque fois une unité distributrice associée à la conduite (16), **caractérisée en ce qu'**à chaque orifice d'écoulement (14) est associé un secteur d'une paroi extérieure der chambre de répartition (12) avec une taille de secteur respective et **en ce que** les secteurs associés aux orifices d'écoulement (14) occupent différentes parts de la somme des secteurs conçus dans la chambre de répartition (12), et **en ce que** les conduites (16), qui sont raccordées sur les orifices d'écoulement (14) dont la taille de secteur correspondante est supérieure à la taille de secteur d'autres orifices d'écoulement (14), présentent sur la zone de raccordement sur l'orifice d'écoulement (14) une pression dynamique plus élevée que celle des conduites (16) qui sont raccordées sur des orifices d'écoulement (14) dont la taille de secteur correspondante est inférieure à la taille de secteur d'autres orifices d'écoulement (14).

2. Machine agricole (2) selon la revendication 1, **caractérisée en ce que** la chambre de répartition (12) présente une forme de base circulaire.

3. Machine agricole (2) selon la revendication 2, **caractérisée en ce que** les parts respectives des orifices d'écoulement (14) à la somme des secteurs conçus dans la chambre de répartition (12) résultent de différentes parts d'arc de cercle qui sont assignées aux orifices d'écoulement (14) respectifs, et/ou de surfaces de sections transversales de différentes dimensions des orifices d'écoulement (14) dans la chambre de répartition (12).

4. Machine agricole (2) selon l'une quelconque des revendications précédentes, **caractérisée en ce que** dans la zone d'embouchure dans la chambre de répartition (12), la conduite de raccordement (8) présente une orientation au moins approximativement verticale, de sorte qu'elle introduit les matières solides granuleuses à partir d'une direction au moins approximativement verticale dans la chambre de répartition (12), la conduite de raccordement (8) débouche au moins approximativement au centre dans la chambre de répartition (12), de sorte que les matières solides granuleuses soient convoyées au centre dans la chambre de répartition (12), et dans la chambre de répartition (12) sont conçues des surfaces déflectrices (20), à l'aide desquelles les matières solides sont redirigées à partir de la direction au moins approximativement verticale dans une direction au moins approximativement horizontale et radiale vers les orifices d'écoulement (14).

5. Machine agricole (2) selon l'une quelconque des revendications précédentes, **caractérisée en ce que** la chambre de répartition (12) comporte entre 3 et 48 orifices d'écoulement (14).

6. Machine agricole (2) selon l'une quelconque des revendications précédentes, **caractérisée en ce que** la chambre de répartition (12) est délimitée sur sa périphérie au-delà de la hauteur de construction des orifices d'écoulement (14) par deux corps moulés de forme annulaire, qui sont séparés l'un de l'autre par une ligne de séparation s'écoulant au moins approximativement à l'horizontale, et les deux corps moulés comportent des évidements mutuellement adaptés qui forment par paire chaque fois un orifice d'écoulement (14).

7. Machine agricole (2) selon l'une quelconque des revendications précédentes, **caractérisée en ce que** sur le côté dirigé vers l'extérieur de la paroi extérieure, les orifices d'écoulement (14) sont **caractérisés par** un marquage d'identification (22).

8. Machine agricole (2) selon l'une quelconque des revendications précédentes, **caractérisée en ce qu'**entre des orifices d'écoulement (14) voisins sont placés des listels séparateurs mobiles, dont la position dans l'espace est ajustable manuellement ou par moteur.

9. Machine agricole (2) selon la revendication 8, **caractérisée en ce que** sur les orifices d'écoulement (14), les conduites (16) et/ou les unités distributrices sont placés des capteurs connectés sur une électronique d'évaluation, à l'aide desquels la quantité de matières solides granuleuses convoyée dans une conduite individuelle est déterminée, l'électronique d'évaluation compare les valeurs quantitatives déterminées des conduites (16) individuelles et affiche des différences quantitatives et/ou les compare et/ou délivre à l'attention d'actionneurs des signaux de réglage, à l'aide desquels les listels séparateurs sont ajustables.

10. Machine agricole (2) selon l'une quelconque des revendications précédentes, **caractérisée en ce que** sur des orifices d'écoulement (14), des conduites (16) et/ou des unités distributrices sont placés des éléments d'étranglement, par lesquels la pression dynamique dans la conduite (16) concernée est augmentée.

11. Machine agricole (2) selon la revendication 10, **caractérisée en ce que** les éléments d'étranglement (30) sont conçus en étant mobiles et/ou à volumétrie variable et **en ce que** leur position dans l'espace et/ou leur forme volumétrique est ajustable manuellement et/ou par moteur.

12. Machine agricole (2) selon la revendication 11, **caractérisée en ce que** sur les orifices d'écoulement (14), les conduites (16) et/ou les unités distributrices sont placés des capteurs connectés sur une électronique d'évaluation, à l'aide desquels la quantité de matières solides granuleuses convoyée dans une conduite individuelle est déterminée, l'électronique d'évaluation compare les valeurs quantitatives déterminées des conduites (16) individuelles et affiche des différences quantitatives et/ou délivre à l'attention d'actionneurs des signaux de réglage, à l'aide desquels les éléments d'étranglement sont mobiles et/ou variables en volumétrie.
